# EUROPEAN PATENT SPECIFICATION

(11) **EP 2 003 852 B1**
(45) Date of publication and mention of the grant of the patent: **04.11.2015**
(21) Application number: 07110354.3
(22) Date of filing: 15.06.2007
(51) Int. Cl.: H04L 29/08

(54) **Method for improving output of data from a remote gateway at a mobile device and download management unit**
Verfahren zur Verbesserung der Datenausgabe von einem Fern-Gateway an eine mobile Vorrichtung und Download-Verwaltungseinheit
Procédé d'amélioration d'entrée de données à partir d'une passerelle à distance sur un dispositif mobile et unité de gestion de téléchargement

(43) Date of publication of application: 17.12.2008
(73) Proprietor: Vodafone GmbH, 40549 Düsseldorf (DE)
(72) Inventor: Martin, Maurice, 3620, Ianaken (BE)
(74) Representative: Cullinane, Marietta Bettina

(56) References cited:
- EP-A- 1 303 964
- WO-A-01/33781
- WO-A-02/084947
- HAO-HUA CHU ET AL: "Challenges: wireless web services" PARALLEL AND DISTRIBUTED SYSTEMS, 2004. ICPADS 2004. PROCEEDINGS. TENT H INTERNATIONAL CONFERENCE ON NEWPORT BEACH, CA, USA 7-9 JULY 2004, PISCATAWAY, NJ, USA,IEEE, 7 July 2004 (2004-07-07), pages 657-664, XP010710658 ISBN: 978-0-7695-2152-7

## Description

The present invention relates to a method for improving the output of data from a remote gateway at a mobile device. The invention further relates to a download management unit.

In wireless communication systems wireless access to Internet applications can be provided from a terminal of the wireless communication system, in particular from a mobile phone. The communication from the mobile phone to the respective units, e.g. a gateway, is presently carried out according to the so called Wireless Application Protocol (WAP).

The content may be accessed from the mobile phone by a browser application, installed on the mobile phone. From this WAP enabled mobile phone, websites on the Internet can be accessed and viewed on the mobile phone or content may be downloaded to the mobile phone. Websites that have been developed for mobile access can use specific functionality, both hardware and software, on the mobile phone. The functionality can be identified by a so called User Agent Profiling Specification (UAProf). This UAProf will be sent by the browser installed on the mobile phone to the remote content site, where the content may be adapted to the functionalities available on the mobile phone. The use of UAProf in a Wireless Application environment is for example described in EP 1 303 964 B1.

In WO 01/33781 A a method for implementing a multimedia messaging service is described. According to this method, messages such as text messages and so on which are supposed to be delivered to the terminal are adapted according to information on the property of the wireless terminal which may be stored in a multimedia message service centre (MMSC). One disadvantage of this method is that in case the information on the properties of the wireless terminal is not available at the MMSC, the MMSC has to request the respective information from the wireless terminal.

Furthermore WO 02/084947 A describes a method and system for transmission-based billing of applications. According to this document the provisioning of wireless applications may be performed by customizing and distributing of content for particular use. The applications can be downloaded from a so called Mobile Application System (MAS). The applications are pre-provisioned or dynamically provisioned for the individual mobile devices. Within the pre-provisioning or dynamic provisioning, the application is customized according to the level of authorisation and the capability of the subscriber device. The application to be downloaded is thus selected according to the device capabilities. One disadvantage of this document is that the information on the capabilities of the mobile device will not be available for further processing within the application once it is downloaded.

One disadvantage of the browsing solution according to the prior art using a browser installed on the mobile phone for browsing the Internet is that the execution of a browser application on the phone requires a considerable amount of processing power and/or memory space on the mobile phone. The overall processing power and/or memory space of mobile devices, such as mobile phones is, however, limited and the processing time for processing browsing requests and loading content may result in an unsatisfying user experience.

Thin client technologies, such as Microsoft RDP or Citrix, overcome this disadvantage, as all content which is browsed via this thin client technology, e.g. from the Internet or a corporate domain, will be executed on a remote display gateway. While addressing the problem of processing power and memory space, this thin client based browsing technology has disadvantages when being used from a mobile device. The content and the browser application will be handled at the remote display gateway. Hence, the UAProf of the mobile device displaying the user interface of the remote display gateway will not be available at the remote display gateway and in particular not within the browser application. Hence, it will not be possible to tune the content according to the facilities available on the mobile phone.

The problem underlying the present invention is thus to provide a solution for improved user experience when using browsing applications from a mobile device, in particular a mobile phone.

According to a first aspect, the present invention relates to a method for improving output of data from a remote gateway at a mobile device of a mobile communication network via a thin client application. The method is characterized in that when installing the thin client application on the mobile device, device capability information is included within the thin client application for subsequent transmission of the device capability information within signals from the thin client application on the mobile device to the remote gateway.

The mobile device to be used in the present invention is preferably a device, which communicates with entities of a communication network, especially the Internet. The mobile device can thus be any mobile device capable of accessing the Internet or Intranet. As such, mobile device may be a mobile or cellular phone. It may, however, also be a PDA being connected to the communication network via a network such as GSM or UMTS.

The device capabilities according to the present invention are preferably features of the mobile device such as the size of the screen, the available memory space, the processing power of the mobile device and so on. The device capability information may be an indication of one or more of these capabilities. Preferably, the device capability information is, however, an indication of a storage location, where details on the device capabilities is available. In particular, a URL of a website providing indications of the device capabilities can be used as device capability information. By using the device capability information, in particular a URL where all device capabilities are stored, all the device capabilities can be considered during a thin client session or a remote display session.

The remote gateway comprises or represents a remote display gateway, which serves for delivering display data to the mobile device. The remote display gateway is preferably part of the remote gateway, but may also be a separate entity which is connected to the remote gateway. On the remote gateway, in particular on the remote display gateway a server based application is installed, which preferably is a browser for browsing web sites on the Internet. The remote display gateway also serves for receiving and processing requests from the mobile device. These requests are being issued by the mobile device from within a thin client application on the mobile phone.

The thin client application, which will hereinafter also be referred to as the thin client, is preferably a program installed on mobile device for remote access to a server based application installed on the remote gateway for display of the user interface of the server based application on the mobile phone. The requests, which can be issued by the mobile device, hence, include selections of options displayed on the mobile device. The mobile device with the thin client application installed thereon serves as a mere input and output device for a server based application running on the remote gateway. The communication between the mobile device and the remote gateway is preferably established according to the so called remote display protocol.

Via the thin client application a browsing session may be carried out. A browsing session is a session, wherein content on remote servers is being accessed. Preferably, the browsing session is an Internet browsing session. It is, however, also possible to browse other networks such as an intranet. The remote gateway serves as an access point to the net to be browsed. The browser unit is preferably a unit at the remote gateway, where a browser application is executed. The browser application and/or unit will hereinafter also be referred to as the browser.

When websites are browsed in a browsing session via a thin client application, the content of the website is downloaded from a server by a browser executed at a remote gateway. As the device capabilities of a mobile device which is connected to the remote gateway may not be suitable for the output, in particular the display of the website, it would be beneficial to be able to adapt or tune the output of the data from the remote gateway to the mobile phone according to the device capabilities.

By providing device capability information within the thin client application during the installation thereof on the mobile device this information will be available for transmission to the remote gateway. Without the provision of the capability information within the thin client application, this information might be available at the mobile device or to the user of the mobile device, but could not easily be transmitted to the remote gateway. As the content or data to be output to the mobile device is processed at the remote gateway, it would, hence, not be possible to include the device capability information in the processing of the content or data.

In addition, by providing the device capability information during the installation of the thin client application, it will be available within the thin client application and can thus be used for each session which is initiated from the thin client on the mobile device. A manual user input at the initiation of such sessions is not necessary.

The device capability information may be received at the mobile device within an installation package for installation of the thin client application. This approach is advantageous, as addition of information to an installed application or program on a mobile device is not possible or would at least require interaction from the user. If the device capability information is, however, received at the mobile device within an installation package, the device capability information can be included in the application and will, hence, be available within the application, when the application is executed. An installation package may be a program for automatic installation of the thin client application contained within the package.

According to one embodiment of the inventive method, a remote management unit, in particular a download management unit, receives a download request signal for download of an installation package for a thin client application from the mobile device, wherein the download request signal comprises device capability information, the remote management unit extracts the device capability information from the download request signal and processes the installation package to be downloaded to the mobile device with the extracted device capability information.

This embodiment of the method is advantageous as also the required processing power at the remote management unit is minimized.

By transmitting the device capability information within the download request, the assigning of the device capability information to the respective mobile device can be performed without additional assignment and/or comparison steps at the remote management unit. In addition, the signalling between the mobile device and the remote management unit can be minimized, by including the device capability information in the download request.

The access of the mobile device to the remote management unit may be established via a download website provided by the remote management unit, i.e. download manager. The user may access this download website via a local browser on the mobile device from which respective download signals can be issued.

The extraction of the device capability information from the download request signal may be the reading of predefined fields. The processing of the installation package to be downloaded can consist of the mere insertion of the device capability information into the installation package. The device capability information will be inserted in the package in such a manner that the device capability information will be available at the mobile device while installing the thin client application. In the installation package one ore more variables may be defined, that have to be configured before the installation on the mobile device. The device capability information, e.g. an indication of the device capability information storage location (URL) may be one of those variables.

The device capability information may be included in the header of the download request signal to the remote management unit. The entries of this signal field can easily be extracted and the header is easy to identify.

According to a preferred embodiment, the processing of the installation package includes the comparison of device capability information relating to the installation package, in particular to the thin client application to be installed thereby, with the extracted device capability information.

The device capability information relating to the installation package and/or to the thin client application, will hereinafter also be referred to as the device capability requirements. By comparing the device capability information of the mobile device and in particular the details of device capabilities with device capability requirements, it can be ensured that the installation package will only be provided to the mobile device, if the device capability information matches the device capability requirements. This is beneficial as an unsuccessful installation attempt from the user of the mobile device can be avoided. Also an unsatisfying performance of the thin client application after installation, for example due to lack of processing power of the mobile device can be avoided.

Once the thin client application is installed on the mobile device, the device capability information may be included in signals from the thin client application on the mobile device to the remote gateway. These signals are communicated between the display device, which is the mobile device, and the processing device, which is the remote display gateway, for display requests and display data. By using this communication channel for the transmission, it is not necessary to establish a separate communication channel and the processing requirements at the mobile device are, hence, reduced. In addition it is advantageous to transmit the device capability information within signals of the thin client application, as the assigning of device capability information to a specific mobile device at the remote gateway will be facilitated. The remote gateway can automatically use the received device capability information for processing of any display data, which is to be transmitted to the mobile device from which the signal including the device capability information had been received. Thereby also the processing power and time at the remote gateway is reduced.

Preferably, the device capability information is included in the setup signal for a remote display session from the thin client application on the mobile device to the remote display gateway. This way the device capability information can be used during this session and if the user uses a different mobile device for a subsequent remote display gateway, the appropriate device capability information will be used again, as they will be transmitted with the setup signal for the new session.

According to one embodiment, the remote gateway receives a signal from the thin client application installed on the mobile device comprising device capability information, the remote gateway extracts the device capability information from the signal and processes data to be output at the mobile device or information relating to the data to be output at the mobile with the extracted device capability information.

By processing the data or information relating to the data to be output at the mobile device with the extracted device capability information, the data can be optimized for the specific mobile device according to its device capabilities.

The processing of the data to be displayed at the mobile device may comprise the modification and/or conversion of data received at the remote display. For example images can be compressed to fit to the screen of the mobile device.

According to another aspect, the invention relates to a download management unit for managing download of an installation package for installing a thin client application on a mobile device of a mobile communication network to the mobile device. The download management unit is characterized in that the download management unit comprises an extraction unit for extracting device capability information from a download request signal from the mobile device from which the download request signal originated and in that the download management unit comprises a processing unit for processing installation packages, wherein the processing unit is connected to the extraction unit for including the output of the extraction unit in the processing of the installation package for subsequent transmission of the device capability information within signals from the thin client application on the mobile device to the remote gateway.

Within the processing unit, the installation package may, hence, be provided with the device capability information extracted from the download request. The processing unit will insert the device capability information into the installation package such that during installation, the device capability information will be included in the thin client application.

The download management unit is preferably designed to be used for the inventive method.

Features and advantages which are described with respect to the inventive method also relate to the inventive download management unit, where applicable, and vice versa. The features and advantages may also apply to a remote gateway, in particular a remote display gateway.

Units and components of the download management unit and the remote display gateway may be realized as hardware components and/or software components. The units and/or components may also at least partially be combined.

The present invention will now be described again in detail with reference to the enclosed figures.
Figure 1 shows a system in which the inventive method can be used; and
Figure 2 shows a flowchart of one embodiment of the inventive method.

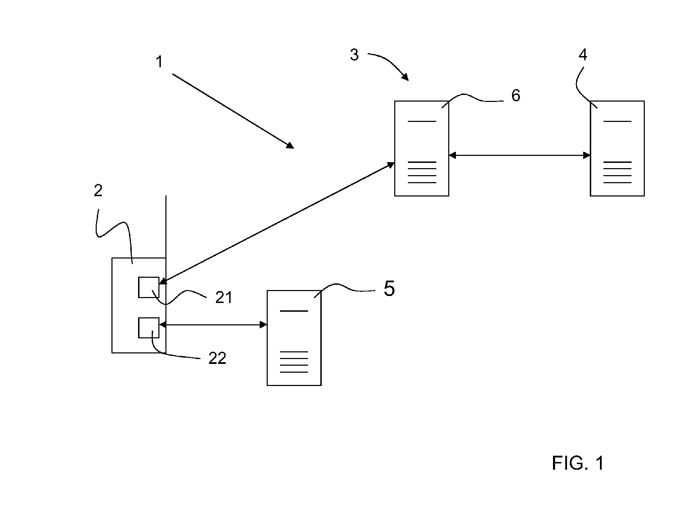

The system 1 shown in Figure 1 comprises a mobile device, depicted as a mobile phone 2. On the mobile phone 2 a remote display client 21 and a local browser 22 are provided. The remote display client 21 and the local browser 22 may be software installed on the mobile phone 2. The local browser 22 is equipped to communicate with a download management unit 5, which is remote to the mobile device 2.

The system 1 further comprises a remote gateway 3. The remote gateway 3 is connected to or can access a network server 4, which might host a website or a portal. In the depicted system 1, the remote gateway 3 comprises a remote display gateway 6 further management units may be provided at the remote gateway 3.

The display client 21 on the mobile phone 2 is a thin client application, i.e. allows remote access and display of a server based application, such as a browser, installed and executed on the remote gateway 3. The user may use the thin client application to browse sites on the Internet. This browsing is performed by the remote display gateway 6, in particular at a browser application installed and executed thereon. The browser application can also be installed on a separate unit (not shown). The content to be displayed to the user via the remote display client 21 is downloaded by the remote display gateway 6 from a network server 4. The thus available content will be made available for display on the mobile phone 2. The content itself, however, resides at the remote display gateway 6.

The thin client based browsing is thus performed by the remote display gateway 6, but can be manipulated via the mobile phone 2.

The communication between the local browser 22 and the download management unit 5 may be performed via a website offered by the download management unit 5. For using thin client technology, a dedicated client needs to be available at the mobile device. The dedicated client, in particular the remote display client 21 needs to be installed or pre-provisioned on the mobile device.

The system 1 shown in Figure 1 depicts the mobile phone 2 with having the thin client application, i.e. the remote display client 22 already installed.

The remote display client 22 may be pre-provisioned on the mobile device. Alternatively, the user may download a respective installation package offered by the client download manager 5. The client download manager can be accessed by the mobile device 2 via a download site offered by the client download manager 5. By using the local browser 21 of the mobile device 2 the site can be accessed. In the header of the request of the mobile device 2 towards the download site, in particular in the http header, the device capability information will be included. The device capability information is the so called User Agent Profiling Information URL (UAProf URL). The client download manager 5 will extract this UAProf URL from the request and will add it to the installation package for the remote display client 21. Once the remote display client 21 installation package has been downloaded and the remote display client 21 has been installed on the mobile device 2, the UAProf URL is signalled in each new Remote Display Session established with the remote display gateway 3. The remote display gateway 3 can use the received device details for tuning the session and the browsed content, e.g. from the server 4.

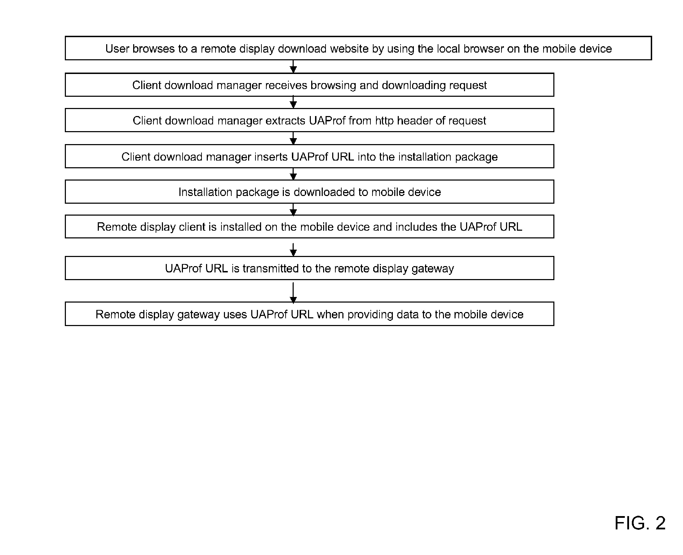

One embodiment of the invention will now be described with reference to Figure 2. A user browses to a remote display download site offered by a client download manager 5 by using the local browser 22 on his mobile phone 2. This browsing request contains the UAProf as part of the x-wap-profile in the http header. As the user selects an installation package to be downloaded, the client download manager 5 extracts the needed URL from the http header. If only one installation package is offered on the download site and no other options are available on that site, the mere browsing request of the local browser will be the download request. The client download manager 5 obtains the device capabilities from the received URL. Based on these capabilities, it is verified if the remote display client 22 is capable of running on the mobile device 2, i.e. whether the mobile device 2 has the capabilities to support the remote display client 22.

The download manager 5 pre-provisions the extracted UAProf URL, e.g. http://nds1.nds.manufacturer.com/uaprof/manufacturer6600v100.xml into the installation package for the remote display client 22. Also the MSISDN of the mobile device 2 from which the download request was received, could be added to the installation package.

The thus prepared installation package is then downloaded to the mobile device 2. The user installs the remote display client 22 on the mobile device 2. If the user starts the remote display client 22, the client will signal in-band into the remote display protocol the UAProf URL to the remote display gateway 6. The remote display gateway 6 uses and preferably stores the UAProf URL only for this remote display session. This is advantageous, as the user could use a different mobile device for the next remote display session.

With the UAProf URL being available at the remote display gateway, the remote display session and content can be optimized for the specific mobile device 2 by the remote display gateway 6.

With the present invention, hence, the availability of the used device capabilities is offered to a remote display gateway, which allows for optimized usage of thin client technology without any user interaction.

## Claims

1. Method for improving output of data from a remote gateway (3) at a mobile device (2) of a mobile communication network via a thin client application (21), **characterized in that** when installing the thin client application (21) on the mobile device (2), device capability information is included within the thin client application (21) for subsequent transmission of the device capability information within signals from the thin client application (21) on the mobile device (2) to the remote gateway (3).

2. Method according to claim 1, **characterized in that** the device capability information is received at the mobile device (2) within an installation package for installation of the thin client application (21).

3. Method according to any of claims 1 or 2, **characterized in that** a remote management unit, in particular a download management unit (5), receives a download request signal for download of an installation package for a thin client application (21) from the mobile device (2), wherein the download request signal comprises device capability information, the remote management unit (5) extracts the device capability information from the download request signal and processes the installation package to be downloaded to the mobile device (2) with the extracted device capability information.

4. Method according to claim 3, **characterized in that** the device capability information is included in the header of the download request signal to the remote management unit (5).

5. Method according to claim 3 or 4, **characterized in that** the processing of the installation package includes the comparison of device capability information relating to the installation package, in particular to the thin client application (21) to be installed thereby, with the extracted device capability information.

6. Method according to anyone of claims 3 to 5, **characterized in that** the processing of the installation package includes the insertion of the extracted device capability information into the installation package.

7. Method according to anyone of claims 1 to 6, **characterized in that** the remote gateway (3) receives a signal from the thin client application (21) installed on the mobile device (2) comprising device capability information, the remote gateway (3) extracts the device capability information from the signal and processes data to be output at the mobile device (2) or information relating to the data to be output at the mobile with the extracted device capability information.

8. Method according to claim 7, **characterized in that** the processing of the data to be displayed at the mobile device (2) comprises the modification and/or conversion of data received at the remote gateway (3).

9. Download management unit for managing download of an installation package for installing a thin client application (21) on a mobile device (2) of a mobile communication network to the mobile device (2), **characterized in that** the download management unit (5) comprises an extraction unit for extracting device capability information from a download request signal from the mobile device (2) from which the download request signal originated and **in that** the download management unit (5) comprises a processing unit for processing installation packages, wherein the processing unit is connected to the extraction unit for including the output of the extraction unit in the processing of the installation package for subsequent transmission of the device capability information within signals from the thin client application (21) on the mobile device (2) to the remote gateway (3).

## Patentansprüche

1. Verfahren zur Verbesserung der Ausgabe von Daten von einem Fern-Gateway an einem Mobilgerät (2) eines mobilen Kommunikationsnetzwerkes über eine Thin-Client Anwendung (21), **dadurch gekennzeichnet, dass** wenn die Thin-Client Anwendung (21) auf dem Mobilgerät (2) installiert wird, Gerätefähigkeitsinformationen in die Thin-Client Anwendung (21) aufgenommen werden zur anschließenden Übermittlung der Gerätefähigkeitsinformationen in Signalen von der Thin-Client Anwendung (21) auf dem Mobilgerät zu dem Fern-Gateway (3).

2. Verfahren nach Anspruch 1, **dadurch gekennzeichnet, dass** die Gerätefähigkeitsinformationen an dem Mobilgerät (2) in einem Installationspaket zur Installation der Thin-Client Anwendung (21) empfangen werden.

3. Verfahren nach einem der Ansprüche 1 oder 2, **dadurch gekennzeichnet, dass** eine Fern-Verwaltungseinheit, insbesondere eine Download-Verwaltungseinheit (5), ein Download-Anfragesignal zum Download eines Installationspaketes für eine Thin-Client Anwendung (21) von dem Mobilgerät (2) empfängt, wobei das Download-Anfragesignal Gerätefähigkeitsinformationen umfasst, die Fern-Verwaltungseinheit (5) die Gerätefähigkeitsinformationen aus dem Download-Anfragesignal extrahiert und das Installationspaket, das an das Mobilgerät (2) heruntergeladen werden soll, mit den extrahierten Gerätefähigkeitsinformationen verarbeitet.

4. Verfahren nach Anspruch 3, **dadurch gekennzeichnet, dass** die Gerätefähigkeitsinformationen in dem Header des Download-Anfragesignals zu der Fern-Verwaltungseinheit (5) enthalten sind.

5. Verfahren nach einem der Ansprüche 3 oder 4, **dadurch gekennzeichnet, dass** die Verarbeitung des Installationspaketes den Vergleich von Gerätefähigkeitsinformationen, die sich auf das Installationspaket beziehen, insbesondere auf die Thin-Client Anwendung (21), die dadurch installiert werden soll, mit den extrahierten Gerätefähigkeitsinformationen einschließt.

6. Verfahren nach einem der Ansprüche 3 bis 5, **dadurch gekennzeichnet, dass** die Verarbeitung des Installationspaketes das Einfügen der extrahierten Gerätefähigkeitsinformationen in das Installationspaket einschließt.

7. Verfahren nach einem der Ansprüche 1 bis 6, **dadurch gekennzeichnet, dass** das Fern-Gateway (3) ein Signal von der Thin-Client Anwendung (21), die auf dem Mobilgerät (2) installiert ist, das Gerätefähigkeitsinformationen umfasst, empfängt, das Fern-Gateway (3) die Gerätefähigkeitsinformationen aus dem Signal extrahiert und Daten, die an dem Mobilgerät (2) ausgegeben werden sollen oder Informationen, die sich auf die an dem Mobilgerät auszugebenden Daten beziehen, mit den extrahierten Gerätefähigkeitsinformationen verarbeitet.

8. Verfahren nach Anspruch 7, **dadurch gekennzeichnet, dass** die Verarbeitung der Daten, die an dem Mobilgerät (2) angezeigt werden sollen, die Modifikation und/oder Umwandlung von Daten, die an dem Fern-Gateway (3) empfangen wurden, umfasst.

9. Download-Verwaltungseinheit zur Verwaltung des Downloads eines Installationspaktes zum Installieren einer Thin-Client Anwendung (21) auf einem Mobilgerät (2) eines mobilen Kommunikationsnetzwerkes (5) an das Mobilgerät (2), **dadurch gekennzeichnet, dass** die Download-Verwaltungseinheit (5) eine Extraktionseinheit zum Extrahieren von Gerätefähigkeitsinformationen aus einem Download-Anfragesignal von dem Mobilgerät (2), von dem das Download-Anfragesignal stammte, umfasst und dass die Download-Verwaltungseinheit (5) eine Verarbeitungseinheit zum Verarbeiten von Installationspaketen umfasst, wobei die Verarbeitungseinheit mit der Extraktionseinheit verbunden ist, um die Ausgabe der Extraktionseinheit in die Verarbeitung des Installationspaktes für die anschließende Übermittlung der Gerätefähigkeitsinformationen in Signalen von der Thin-Client Anwendung (219 auf dem Mobilgerät (2) zu dem Fern-Gateway (3) einzuschließen.

## Revendications

1. Procédé d'amélioration de données sortantes depuis une passerelle distante (3) au niveau d'un dispositif mobile (2) d'un réseau de communication mobile par l'intermédiaire d'une application client léger (21), **caractérisé en ce que**, lors de l'installation de l'application client léger (21) sur le dispositif mobile (2), des informations de capacité de dispositif sont intégrées à l'intérieur de l'application client léger (21) en vue d'une transmission ultérieure des informations de capacité de dispositif à l'intérieur des signaux émis par l'application client léger (21) sur le dispositif mobile (2) vers la passerelle distante (3).

2. Procédé selon la revendication 1, **caractérisé en ce que** les informations de capacité de dispositif sont reçues au niveau du dispositif mobile (2) à l'intérieur d'un pack d'installation destiné à l'installation de l'application client léger (21).

3. Procédé selon l'une quelconque des revendications 1 ou 2, **caractérisé en ce qu'**une unité de gestion distante, en particulier, une unité de gestion de téléchargement (5), reçoit un signal de demande de téléchargement pour le téléchargement d'un pack d'installation d'une application client léger (21) émis par le dispositif mobile (2), dans lequel le signal de demande de téléchargement comprend des informations de capacité de dispositif, l'unité de gestion distante (5) extrait les informations de capacité de dispositif du signal de demande de téléchargement et traite le pack d'installation à télécharger vers le dispositif mobile (2) avec les informations de capacité de dispositif extraites.

4. Procédé selon la revendication 3, **caractérisé en ce que** les informations de capacité de dispositif sont contenues dans l'en-tête du signal de demande de téléchargement vers l'unité de gestion mobile distante (5).

5. Procédé selon la revendication 3 ou 4, **caractérisé en ce que** le traitement du pack d'installation comprend la comparaison des informations de capacité de dispositif relatives au pack d'installation, en particulier, à l'application client léger (21) à installer ainsi, avec les informations de capacité de dispositif extraites.

6. Procédé selon l'une quelconque des revendications 3 à 5, **caractérisé en ce que** le traitement du pack d'installation comporte l'insertion dans le pack d'installation des informations de capacité de dispositif extraites.

7. Procédé selon l'une quelconque des revendications 1 à 6, **caractérisé en ce que** la passerelle distante (3) reçoit un signal émis par l'application client léger (21) installée sur le dispositif mobile (2), comprenant des informations de capacité de dispositif, la passerelle distante (3) extrait du signal les informations de capacité de dispositif et traite les données à délivrer au niveau du dispositif mobile (2) ou des informations relatives aux données à délivrer au niveau du mobile avec les informations de capacité de dispositif extraites.

8. Procédé selon la revendication 7, **caractérisé en ce que** le traitement des données à afficher au niveau du dispositif mobile (2) comprend la modification et/ou la conversion des données reçues au niveau de la passerelle distante (3).

9. Unité de gestion de téléchargement destinée à gérer le téléchargement d'un pack d'installation, destiné à installer une application client léger (21) sur un dispositif mobile (2) d'un réseau de communication mobile, vers le dispositif mobile (2), **caractérisée en ce que** l'unité de gestion de téléchargement (5) comprend une unité d'extraction destinée à extraire des informations de capacité de dispositif sur un signal de demande de téléchargement issu du dispositif mobile (2) à partir duquel provient le signal de demande de téléchargement, et **en ce que** l'unité de gestion de téléchargement (5) comprend une unité de traitement destinée à traiter les packs d'installation, dans laquelle l'unité de traitement est connectée à l'unité d'extraction afin d'intégrer la sortie de l'unité d'extraction lors du traitement du pack d'installation en vue d'une transmission ultérieure des informations de capacité de dispositif à l'intérieur de signaux provenant de l'application client léger (21) sur le dispositif mobile (2) vers la passerelle distante (3).
